# EUROPEAN PATENT APPLICATION

(11) **EP 2 607 948 A1**
(43) Date of publication of application: **26.06.2013**
(21) Application number: 10856052.5
(22) Date of filing: 10.09.2010
(51) Int. Cl.: G02F 1/13357, G09G 3/34, H05B 37/02

(54) **BACKLIGHT MODULE DRIVEN BY ALTERNATE BACKLIGHT AND LIQUID CRYSTAL DISPLAY**

(30) Priority: 17.08.2010 CN 201010260273
(71) Applicant: Shenzhen China Star Optoelectronics Technology Co. Ltd, Shenzhen, Guangdong 518106 (CN)
(72) Inventor: HE, Chengming, Guangdong 518106 (CN); YANG, Chingyuan, Guangdong 518106 (CN)
(74) Representative: Petraz, Gilberto Luigi
(86) International application number: PCT/CN2010/076814
(87) International publication number: WO 2012/022054

(57) **Abstract**

The present invention discloses a backlight module (10, 20) and a liquid crystal display (LCD) (20, 60) having the backlight module (10, 20), which drives light emitting diodes (LEDs) alternately. The present invention utilizes two inverters (26, 28) to individually drive two sets of LEDs (22, 24) alternately. During the same switching period, the two sets of LEDs (22, 24) alternately turn on/off; that is, the two set of LEDs (22, 24) are respectively off in a duty cycle of 50 percent. Since each set of the LEDs (22, 24) is off in half of the switching period, the backlight module (10, 20) and the liquid crystal display (LCD) can prevent over high temperature and reduce heat effectively during lighting the LEDs (22, 24).

## Description

### FIELD OF THE INVENTION

The present invention relates to a backlight module and a liquid crystal display (LCD) having the backlight module, and more particularly, to a backlight module for alternately driving lighting device and an LCD having the backlight module.

### BACKGROUND OF THE INVENTION

With a rapid development of monitor types, novel and colorful monitors with high resolution, e.g., liquid crystal displays (LCDs), are indispensable components used in various electronic products such as monitors for notebook computers, personal digital assistants (PDAs), digital cameras, and projectors. The demand for the novel and colorful monitors has increased tremendously.

A backlight module is a key component of a liquid crystal display (LCD). The backlight module is to provide a sufficient brightness and an even-distribution light source to the LCD panel. Because the LCD is widely used in various electronic products such as a monitor, a notebook computer, a digital camera, and a projector, wherein the panel with large size used for notebook computer and the LCD monitor is especially popular, and the demand for the backlight module has increased tremendously.

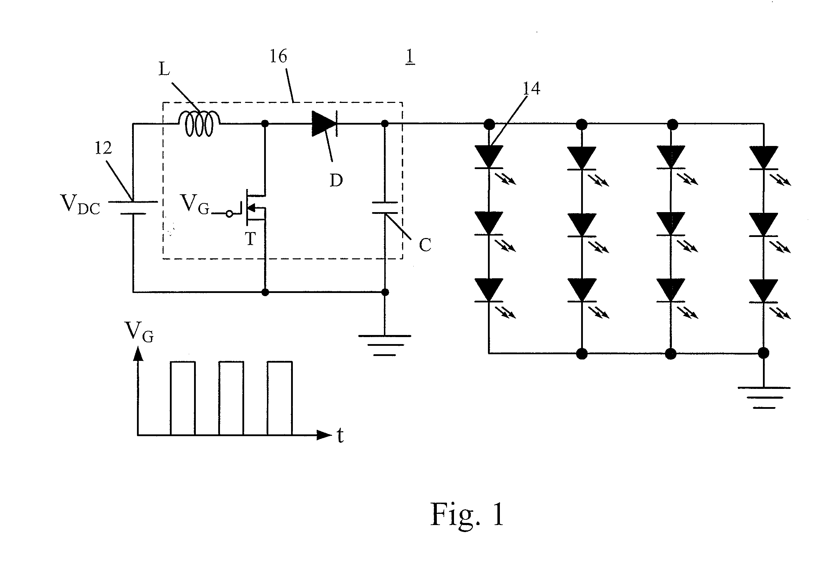

At present, in addition to cold cathode fluorescent lamps (CCFLs), backlight modules also utilize light emitting diode (LED) as a light source. And in recent years, the LED dominates the major market of LCD televisions, since it is mercury-free and thus environmental friendly and fast responding. However, some physical properties of the LED also influence luminous efficiency and lifespan of LED. Temperature plays the most important role in the physical properties that affect the luminous efficiency and lifespan of LED. Therefore, various heat dissipation materials and relevant techniques are gradually applied to LED backlight. It is no doubt that people attempt to reduce the influence of temperature on LED effectively by various heat dissipation techniques. Referring to Fig. 1, Fig. 1 shows a circuit diagram that LED is driven by a traditional converter. A backlight module 1 includes a power supply terminal 12, a few of LEDs 14, and a converter 16. The converter 16 includes an inductor element L, a transistor T, a diode D, and a capacitor element C. The power supply terminal 12 generates direct current (DC) and applies voltage V_{DC} to converter 16, and the transistor T outputs a driving signal to the LEDs 14 in response to switches of on-off signal V_{G}. The LEDs 14 light based on the voltage difference of the driving signal. However, the present LED backlight module 1 merely utilizes a single converter 16 to simultaneously drive all of the LEDs 14, which means that the converter 16 has to output large current to simultaneously drive all of the LEDs 14. However, it results in some potential problems, such as over high temperature, which not only shortens the lifespan of the LEDs 14 but also reduces the luminous efficiency of the LEDs 14.

### SUMMARY OF THE INVENTION

An object of the present invention is to provide a backlight module and an LCD having the backlight module by means of an alternate driving lighting device to reduce heat.

The present invention provides a liquid crystal display which comprises a power supply terminal for generating a supply voltage, and a liquid crystal display panel comprising a liquid crystal layer for displaying images, a switch signal generator for generating a first switch signal and a second switch signal, a first inverter electrically connected to the power supply terminal for generating a first driving signal based on the first switch signal, a second inverter electrically connected to the power supply terminal for generating a second driving signal based on the second switch signal, a first lighting device for lighting based on a voltage difference of the first driving signal output by the first inverter, and a second lighting device for lighting based on a voltage difference of the second driving signal output by the second inverter. A phase difference between the first driving signal and the second driving signal is 180 degrees.

The present invention provides backlight module which comprises a power supply terminal for generating a supply voltage, a switch signal generator for generating a first switch signal and a second switch signal, a first inverter electrically connected to the power supply terminal for generating a first driving signal based on the first switch signal, a second inverter electrically connected to the power supply terminal for generating a second driving signal based on the second switch signal, a first lighting device for lighting based on a voltage difference of the first driving signal output by the first inverter, and a second lighting device for lighting based on a voltage difference of the second driving signal output by the second inverter. A phase difference between the first driving signal and the second driving signal is 180 degrees.

According to the present invention, the present invention, the first lighting device and the second lighting device both comprise a light emitting diode (LED) or a plurality of LEDs connected in serial.

According to the present invention, the first inverter comprises a capacitor element connected in parallel to the first lighting device, an inductor element of which a first end is electrically connected to a first electrode of the power supply terminal, a diode electrically connected between a second end of the inductor element and the first lighting device, and a first transistor. A first end of the first transistor is electrically connected between the inductor element and the diode and a second end of the first transistor is electrically connected to a second electrode of the power supply terminal for conducting while receiving the first switch signal.

According to the present invention, the second inverter comprises, a capacitor element connected in parallel to the second lighting device, an inductor element of which a first end is electrically connected to the first electrode of the power supply terminal, a diode electrically connected between a second end of the inductor element and the second lighting device, and a second transistor. A first end of the second transistor is electrically connected between the inductor element and the diode and a second end of the second transistor is electrically connected to a second electrode of the power supply terminal for conducting while receiving the second switch signal.

According to the present invention, a polarity of the threshold voltage of first transistor is opposite to that of the second transistor and the first and second transistors are connected to one of the first switch signal and the second switch signal.

According to the present invention, the backlight module further comprises an inverter for inverting a switch signal output by the switch signal generator to generate another switch signal, wherein the two switch signals respectively act as the first switch signal and the second switch signal.

Compared with the prior art, the backlight module and the LCD having the backlight module drive the LEDs alternately. If a 50% duty cycle during a switching period is set, the LEDs in the same string will be in off state in the 50% duty cycle. Since the switching frequency is above 1 kHz, so human fails to perceive variations in brightness of the LEDs. Besides, over high temperature produced by the LEDs when lightened simultaneously and heat generated during the lighting of the LEDs can be effectively reduced for the reason that the LEDs are off in half or even more of the switching period.

These and other objects of the claimed invention will no doubt become obvious to those of ordinary skill in the art after reading the following detailed description of the preferred embodiment that is illustrated in the various figures and drawings.

### BRIEF DESCRIPTION OF THE DRAWINGS

Fig. 1 shows a circuit diagram that LED is driven by a traditional converter.
Fig. 2 is a schematic diagram of a liquid crystal display according to a first embodiment of the present invention.
Fig. 3 is a schematic diagram of an LCD according to a second embodiment of the present invention.

### DETAILED DESCRIPTION OF THE PREFERRED EMBODIMENTS

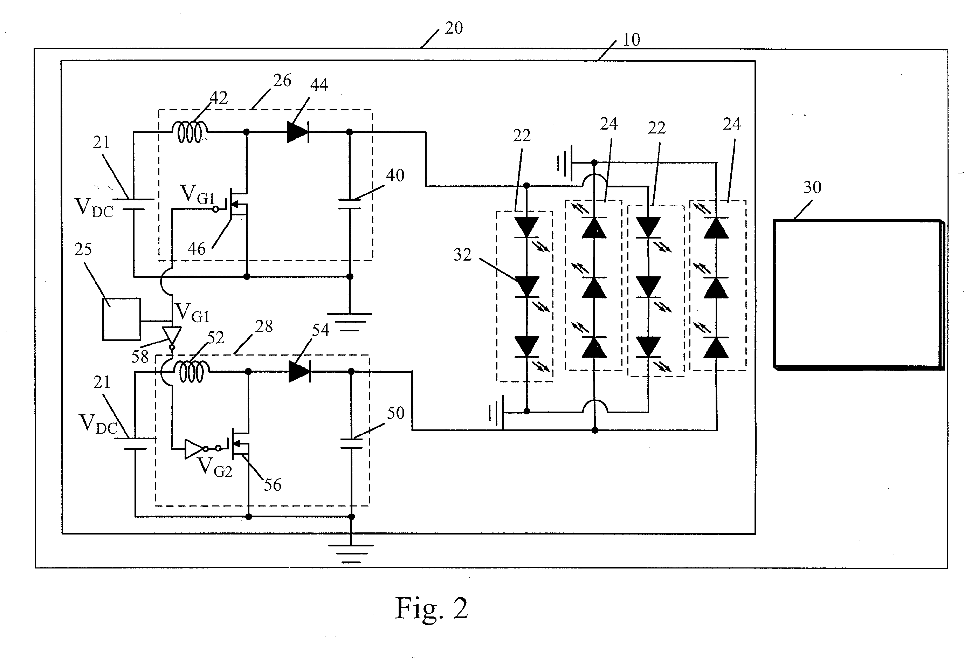

Referring to Fig. 2, Fig. 2 is a schematic diagram of a liquid crystal display (LCD) 20 according to a first embodiment of the present invention. The LCD 20 includes a power supply terminal 21, an LCD panel 30, and a backlight module 10. The backlight module 10 lights that the LCD panel 30 requires with a voltage provided by the power supply terminal 21. The backlight module 10 includes a first lighting device 22, a second lighting device 24, a switch signal generator 25, a first inverter 26, and a second inverter 28. The power supply terminal 21 provides a DC supply voltage V_{DC}. The LCD panel 30 includes a liquid crystal (LC) layer for displaying images. The first lighting device 22 and the second lighting device 24 include a single LED 32 or a few of LEDs 32 in serial. One end of the first lighting device 22 is electrically connected to the first inverter 26 and the other end is electrically connected to a voltage end (a ground end in Fig. 2) for producing light based on the voltage difference of a first driving signal output by the first inverter 26. One end of the second lighting device 24 is electrically connected to the second inverter 28 and the other end is electrically connected to the voltage end (the ground end in Fig. 2) for producing light based on the voltage difference of a second driving signal output by the second inverter 28. The switch signal generator 25 generates a switch signal V_{G1}.

Please continue referring to Fig. 2. The first inverter 26 and the second inverter 28 convert a DC voltage (12V) of the power supply terminal 21 into an alternating current (AC) high voltage. The first inverter 26 includes a capacitor element 40, an inductor element 42, a diode 44, and a first transistor 46. The capacitor element 40 and the first lighting device 22 are connected in parallel. A first end of the inductor element 42 is electrically connected to a first electrode of the power supply terminal 21. The diode 44 is electrically connected between a second end of the inductor element 42 and the first lighting device 22. The inductor element 42 is an charge storage element for reserving energy to apply DC supply voltage from the power supply terminal 21. A first end of the first transistor 46 is electrically connected to the inductor element 42 and to the diode 44 and a second end of it is electrically connected to a second electrode of the power supply terminal 21. In the present embodiment, the first transistor 46 is an N-type metal-oxide-semiconductor (MOS) transistor, having a gate received a first switch signal V_{G1} which is a square-wave signal. When the first switch signal V_{G1} is at a low level, the first transistor 46 is turned off and the power supply terminal 21, the inductor element 42, the diode 44 and the first lighting device 22 form a closed current circuit. Meanwhile, the first lighting device 22 receives a first driving signal (i.e., level of an output end of the diode 44). The first lighting device 22 emits light because of the voltage difference of the first driving signal. When the first switch signal V_{G1} is at a high level, the first transistor 46 is turned on. Meanwhile, the diode 44 is off under reverse bias, and the first lighting device 22 can not receive the first driving signal. Therefore, the first lighting device 22 can not generate light due to no voltage difference of the first driving signal.

Similarly, the second inverter 28 includes a capacitor element 50, an inductor element 52, a diode 54, and a second transistor 56. The capacitor element 50 and the second lighting device 24 are connected in parallel. A first end of the inductor element 52 is electrically connected to the power supply terminal 21. The diode 54 is electrically connected between a second end of the inductor element 52 and the second lighting device 24. The inductor element 52 is an charge storage element for reserving energy to apply DC supply voltage from the power supply terminal 21. A first end of the second transistor 56 is electrically connected to the inductor element 52 and to the diode 54 and a second end of it is electrically connected to a second electrode of the power supply terminal 21. In the present embodiment, the second transistor 56 is an NMOS transistor, having a gate received a first switch signal V_{G1} which is a square-wave signal. It is notified that, an inverter 58 inverts the first switch signal V_{G1} to form the second switch signal V_{G2}, so the phase difference between the first switch signal V_{G1} and the second switch signal V_{G2} is 180 degrees. Therefore, when the first switch signal V_{G1} is at a low level, the second switch signal V_{G2} is at a high level. When the second switch signal V_{G2} is at low level, the second transistor 56 is turned off and the power supply terminal 21, the inductor element 52, the diode 54 and the second lighting device 24 form a closed current circuit. Meanwhile, the second lighting device 24 receives a second driving signal (i.e., level of an output end of the diode 54). The second lighting device 24 emits light because of the voltage difference of the second driving signal. When the second switch signal V_{G2} is at high level, the second transistor 56 is turned on. Meanwhile, the diode 54 is off under reverse bias, and the second lighting device 24 can not receive the second driving signal. Therefore, the second lighting device 24 can not generate light due to no voltage difference of the second driving signal. The phase difference between the first switch signal V_{G1} and the second switch signal V_{G2} is 180 degrees, which causes that the phase difference between the first driving signal and the second driving signal is 180 degrees, too. In this way, the luminescent time of the first lighting device 22 and that of the second lighting device 24 are alternate since they are respectively driven by the first driving signals and second driving signals; that is, either the first lighting device 22 or the second lighting device 24 is allowed to emit light at any time.

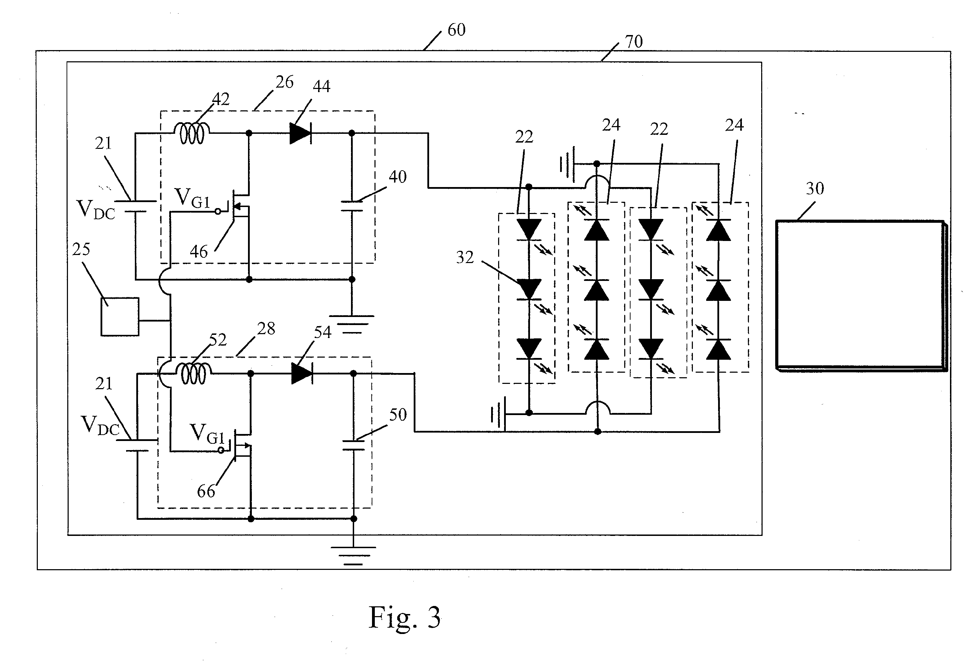

Referring to Fig. 3, Fig. 3 is a schematic diagram of an LCD 60 according to a second embodiment of the present invention. The LCD 60 includes a power supply terminal 21, an LCD panel 30, and a backlight module 70. It is notified that, every element in Fig. 3 marked with the same reference sign shown in Fig. 2 is given the same function. To simplify the description below, the functions of the same elements are not repeated in the following. Differing from the first embodiment in Fig. 2, in this embodiment, a second transistor 66 of the second inverter 28 is a p-type metal-oxide-semiconductor (PMOS) transistor; the gate of the second transistor 66 is also controlled by the first switch signal V_{G1}; the inverter 58 is not needed. Opposite to the NMOS transistor, the PMOS transistor is turned on when the first switch signal V_{G1} is at low level and turned off when the first switch signal V_{G1} is at high level. In other words, even if both of the first transistor 46 and the second transistor 66 are controlled by the first switch signal V_{G1} at the same time, the second lighting device 24 emits light while receiving the second driving signal (i.e., the voltage level of the output end of the diode 54), and the first lighting device 22 can not emit light since it can not receive the first driving signal, and vice versa. This is because the second transistor 66 (PMOS transistor) has opposite polarity of the threshold voltage from the first transistor 46 (NMOS transistor). In this way, the luminescent time of the first lighting device 22 alternates with that of the second lighting device 24 since they receive the same driving signals. In other words, either the first lighting device 22 or the second lighting device 24 is allowed to emit light at any time.

It is supposed that the one skilled in this art understand that, as long as the polarity of the turn-on voltage of the first transistor 46 is opposite to that of the second transistor 66, an object of alternately lighting the first lighting device 22 and the second lighting device 24 can be achieved by using the same switch signal. It is not necessary to set the first transistor 46 and the second transistor 66 as an NMOS transistor or a PMOS transistor as the above-mentioned approach does.

Both of the first switch signal and the second switch signal have a 50% duty cycle in the above embodiments. Practically, the duty cycles of the first switch signal and the second switch signal can be adjusted to 60% to 40% or to other ratios depending on actual requirements. And, the duty cycles of the first driving signal and the second driving signal are modified with those of the first switch signal and the second switch signal, too.

Consequently, the backlight module and the LCD having the backlight module drives the first lighting device and the second lighting device alternately. Therefore, if both of the first switch signal and the second switch signal have a 50% duty cycle during the same switching period, the first lighting device and the second lighting device will respectively be in off state in a duty cycle of 50 percent, which can effectively prevent over high temperature when the first lighting device and the second lighting device are lightened simultaneously and can effectively reduce heat during the lighting of the lighting devices.

Although the present invention has been explained by the embodiments shown in the drawings described above, it should be understood to the ordinary skilled person in the art that the invention is not limited to the embodiments, but rather various changes or modifications thereof are possible without departing from the spirit of the invention. Accordingly, the scope of the invention shall be determined only by the appended claims and their equivalents.

## Claims

1. A liquid crystal display comprising a power supply terminal for generating a supply voltage and a liquid crystal display panel comprising a liquid crystal layer for displaying images, **characterized in that** the liquid crystal display further comprises:
a switch signal generator for generating a first switch signal and a second switch signal;
a first inverter electrically connected to the power supply terminal for generating a first driving signal based on the first switch signal;
a second inverter electrically connected to the power supply terminal for generating a second driving signal based on the second switch signal;
a first lighting device for lighting based on a voltage difference of the first driving signal output by the first inverter; and
a second lighting device for lighting based on a voltage difference of the second driving signal output by the second inverter, wherein a phase difference between the first driving signal and the second driving signal is 180 degrees.

2. The liquid crystal display of claim 1, **characterized in that** the first lighting device and the second lighting device both comprise a light emitting diode (LED) or a plurality of LEDs connected in serial.

3. The liquid crystal display of claim 1, **characterized in that** the first inverter comprises:
a capacitor element connected in parallel to the first lighting device;
an inductor element, a first end of the inductor element electrically connected to a first electrode of the power supply terminal;
a diode electrically connected between a second end of the inductor element and the first lighting device; and
a first transistor, a first end of the first transistor electrically connected between the inductor element and the diode and a second end of the first transistor electrically connected to a second electrode of the power supply terminal for conducting while receiving the first switch signal.

4. The liquid crystal display of claim 1, **characterized in that** the second inverter comprises:
a capacitor element connected in parallel to the second lighting device;
an inductor element, a first end of the inductor element electrically connected to the first electrode of the power supply terminal;
a diode electrically connected between a second end of the inductor element and the second lighting device; and
a second transistor, a first end of the second transistor electrically connected between the inductor element and the diode and a second end of the second transistor electrically connected to a second electrode of the power supply terminal for conducting while receiving the second switch signal.

5. The liquid crystal display of claim 4, **characterized in that** the liquid crystal display further comprises an inverter for inverting a switch signal output by the switch signal generator to generate another switch signal, wherein the two switch signals respectively act as the first switch signal and the second switch signal.

6. The liquid crystal display of claim 4, **characterized in that** the polarity of the threshold voltage of first transistor is opposite to that of the second transistor and the first and second transistors are connected to one of the first switch signal and the second switch signal.

7. A backlight module comprising a power supply terminal for generating a supply voltage, **characterized in that** the backlight module further comprises:
a switch signal generator for generating a first switch signal and a second switch signal;
a first inverter electrically connected to the power supply terminal for generating a first driving signal based on the first switch signal;
a second inverter electrically connected to the power supply terminal for generating a second driving signal based on the second switch signal;
a first lighting device for lighting based on a voltage difference of the first driving signal output by the first inverter; and
a second lighting device for lighting based on a voltage difference of the second driving signal output by the second inverter, wherein a phase difference between the first driving signal and the second driving signal is 180 degrees.

8. The backlight module of claim 7, **characterized in that** the first lighting device and the second lighting device both comprise a light emitting diode (LED) or a plurality of LEDs connected in serial.

9. The backlight module of claim 7, **characterized in that** the first inverter comprises:
a capacitor element connected in parallel to the first lighting device;
an inductor element, a first end of the inductor element electrically connected to a first electrode of the power supply terminal;
a diode electrically connected between a second end of the inductor element and the first lighting device; and
a first transistor, a first end of the first transistor electrically connected between the inductor element and the diode and a second end of the first transistor electrically connected to a second electrode of the power supply terminal for conducting while receiving the first switch signal.

10. The backlight module of claim 7, **characterized in that** the second inverter comprises:
a capacitor element connected in parallel to the second lighting device;
an inductor element, a first end of the inductor element electrically connected to the first electrode of the power supply terminal;
a diode electrically connected between a second end of the inductor element and the second lighting device; and
a second transistor, a first end of the second transistor electrically connected between the inductor element and the diode and a second end of the second transistor electrically connected to a second electrode of the power supply terminal for conducting while receiving the second switch signal.

11. The backlight module of claim 10, **characterized in that** the backlight module further comprises an inverter for inverting a switch signal output by the switch signal generator to generate another switch signal, wherein the two switch signals respectively act as the first switch signal and the second switch signal.

12. The backlight module of claim 10, **characterized in that** the polarity of the threshold voltage of first transistor is opposite to that of the second transistor and the first and second transistors are connected to one of the first switch signal and the second switch signal.
